(19) Europäisches Patentamt
European Patent Office
Office européen des brevets

(11) EP 4 191 472 A1

(12) EUROPEAN PATENT APPLICATION

(43) Date of publication:
07.06.2023 Bulletin 2023/23

(21) Application number: 22196068.5

(22) Date of filing: 16.09.2022

(51) International Patent Classification (IPC):
G06N 3/006 (2023.01)       G06N 3/09 (2023.01)
G06N 3/04 (2023.01)        G06N 3/084 (2023.01)

(52) Cooperative Patent Classification (CPC):
G06N 3/006; G06N 3/09; G06N 3/042; G06N 3/084

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.12.2021 JP 2021195394

(71) Applicant: FUJITSU LIMITED
Kawasaki-shi, Kanagawa 211-8588 (JP)

(72) Inventors:
• Yamada, Hiroaki
Kawasaki-shi, Kanagawa, 211-8588 (JP)
• Oishi, Yusuke
Kawasaki-shi, Kanagawa, 211-8588 (JP)

(74) Representative: Hoffmann Eitle
Patent- und Rechtsanwälte PartmbB
Arabellastraße 30
81925 München (DE)

(54) **AGENT MODEL BUILDING PROGRAM, AGENT MODEL BUILDING METHOD, AND INFORMATION PROCESSING DEVICE**

(57) An agent model building program that causes at least one computer to execute a process, the process includes selecting a pair of samples among samples included in a data set, each of the pair of samples having a value other than stimulus variables related to an input to an agent; acquiring a first output result of the data set by inputting the data set to a neural network; acquiring a first penalty based on whether the value conform to a sensitivity function; and adjusting a parameter of the neural network until a training error based on the first output result and the first penalty satisfy a predetermined condition.

FIG. 2

**Description**

FIELD

The embodiments discussed herein are related to an agent model building program and the like.

BACKGROUND

Agent simulations are simulations that reproduce social phenomena by modeling people's behavior. The agent simulations are used to predict what will happen in unknown circumstances and to evaluate effects of implementing unknown measures. For example, there is a human flow simulation aimed at reproducing congestion that occurs in a city or facility.

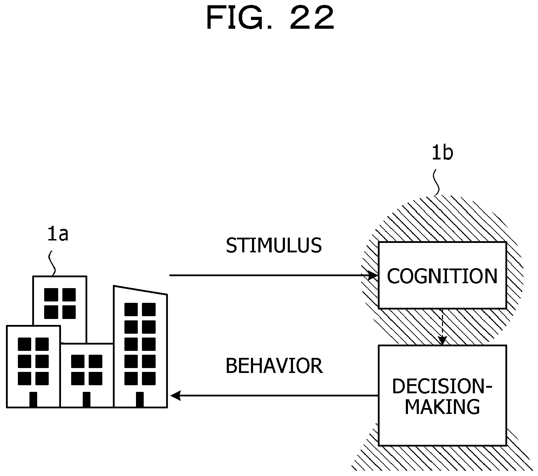

To build an agent simulation, an agent model that reproduces the behavior of each person is built. FIG. 22 is a diagram for describing an agent model. In the following description, the agent model is simply referred to as a "model". For example, in the model, when a "stimulus" is input to an agent 1b from an external environment 1a, the agent 1b cognizes the stimulus, makes a decision, and outputs a "behavior". Building a model is to describe rules of the cognitive and consciousness decision-making part of the agent 1b.

In a case of building an agent simulation, a model is built from data. In this case, a function f of Equation (1) is estimated from the data in which the stimulus and the behavior are paired.

$$\text{The behavior} = f(\text{stimulus}) \ ...(1)$$

In a case where there is sufficient domain knowledge about a target human behavior, the model is built in a deductive method. In the case of building a model by a deductive method, a multinomial discrete selection model is assumed and parameters are set according to the target.

In the method of building a model by a deductive method, it is possible to build a model that behaves appropriately even under unknown circumstances and unknown measures. However, in the method of building a model by a deductive method, it is difficult to create a model without sufficient domain knowledge about a human behavior in a target area.

Meanwhile, in the case where the domain knowledge is not sufficient, a method of building a model inductively from the data is taken. For example, a model that reproduces a human behavior is created from various social data and behavior data using a neural network. In the following description, the neural network is referred to as "NN".

In the method of building a model inductively, it is possible to build a model without sufficient domain knowledge about the human behavior in the target area. However, in the method of building a model inductively, it is not always possible to build a model that behaves appropriately under unknown circumstances and unknown measures that are not included in the data used when training the NN.

By the way, there is an existing technique for building an NN consistent with domain knowledge by designing a loss function. For example, by defining the loss function as in Equation (2), it is possible to build an NN consistent with domain knowledge.

$$\text{The loss function (L)} = \text{a training error (E)} + \lambda \text{ penalty term (W)} \ ...(2)$$

In Equation (2), the loss function (L) is an objective function for machine learning. The NN is trained to minimize the loss function. The training error (E) is the degree of deviation from a correct label. The penalty term indicates the degree to which output of the NN deviates from theory. $\lambda$ is a coefficient.

If the penalty term can be designed well, it is possible to build an NN consistent with domain knowledge by Equation (2).

Here, the existing technique (existing study) for designing a penalty term will be described. Consider a problem of predicting a water temperature (Y) of a lake at each depth (d) and time (t), using physical variables such as an amount of sunshine as features. The existing technique focuses on a physical law that "the deeper the depth, the higher the density of water". Density p of water is obtained from a known physical law f and a water temperature y, as in Equation (3).

$$p = f(y) \ ...(3)$$

In the existing technique, the penalty is calculated on the basis of whether a structure of a predicted value vector of NN (Y (Y hat is omitted)) conforms to the above-described physical law. The predicted value vector is assumed to be a vector shown in Equation (4). The density that can be calculated from the predicted value vector is given in Equation (5).

[Math. 1]

$$\hat{Y} = \left\{\hat{y}_{d_1 t_1}, \hat{y}_{d_2 t_1}, \cdots, \hat{y}_{d_n t_1}, \hat{y}_{d_1 t_2}, \cdots, \hat{y}_{d_n t_2}, \cdots, \hat{y}_{d_1 t_m}, \cdots, \hat{y}_{d_n t_m}\right\} \qquad \cdots (4)$$

[Math. 2]

$$\hat{P} = \left\{\hat{p}_{d_1 t_1}, \hat{p}_{d_2 t_1}, \cdots, \hat{p}_{d_n t_1}, \hat{p}_{d_1 t_2}, \cdots, \hat{p}_{d_n t_2}, \cdots, \hat{p}_{d_1 t_m}, \cdots, \hat{p}_{d_n t_m}\right\} \qquad \cdots (5)$$

For example, the density of a shallow point (di) in depth is lower than the density of a deep point (d2) in depth based on the physical law. For example, "$p_{d1t1} < p_{d2t1}$" should be satisfied (p hat is omitted).

In the existing technique, as described above, whether the physical law is violated is checked from a structure of a predicted value, and the degree of violation is set as the penalty. Here, in the check by the existing technique, whether pairs of ($p_{d1t1}$, $p_{d2t1}$), ($p_{d2t1}$, $p_{d3t1}$), ..., ($P_{dn-1t1}$, $p_{dnt1}$) conform to the above-described magnitude relationship is evaluated at each time. Here, the case of time t1 is illustrated.

U.S. Patent Application Publication No. 2018/0157977, International Publication Pamphlet No. WO 2021/005739, and Japanese Laid-open Patent Publication No. 2001-134706 are disclosed as related art.

SUMMARY

[TECHNICAL PROBLEM]

However, it is difficult to evaluate whether to conform to human psychology from an analysis of the structure of the predicted value vector described in the above existing technique. This is because the law of human psychology is knowledge about input/output relationships, such as performing a certain behavior (output) under a certain condition (input).

For example, in the existing technique, it is not possible to calculate the penalty regarding the human psychological law and not possible to build the NN consistent with the domain knowledge. Therefore, it is not possible to improve reproducibility under unknown conditions and unknown measures.

In one aspect, an object of the embodiments is to provide an agent model building program, an agent model building method, and an information processing device capable of improving reproducibility under unknown conditions and unknown measures.

[SOLUTION TO PROBLEM]

According to an aspect of the embodiments, an agent model building program that causes at least one computer to execute a process, the process includes selecting a pair of samples among samples included in a data set, each of the pair of samples having a value other than stimulus variables related to an input to an agent; acquiring a first output result of the data set by inputting the data set to a neural network; acquiring a first penalty based on whether the value conform to a sensitivity function; and adjusting a parameter of the neural network until a training error based on the first output result and the first penalty satisfy a predetermined condition.

[ADVANTAGEOUS EFFECTS OF INVENTION]

It is possible to improve the reproducibility under unknown conditions and unknown measures.

BRIEF DESCRIPTION OF DRAWINGS

FIG. 1 is a graph illustrating a theoretically obtained relationship between a stimulus and a response;
FIG. 2 is a diagram (1) for describing processing of an information processing device according to the present first embodiment;

FIG. 3 is a diagram for describing an existing technique;

FIG. 4 is a diagram (2) for describing the processing of the information processing device according to the present first embodiment;

FIG. 5 is a functional block diagram illustrating a configuration of the information processing device according to the present first embodiment;

FIG. 6 is a table illustrating an example of a data structure of a training data set according to the present first embodiment;

FIG. 7 is a table illustrating an example of a data structure of an evaluation table according to the first embodiment;

FIG. 8 is a flowchart illustrating a processing procedure of the information processing device according to the present first embodiment;

FIG. 9 is a diagram (1) for describing processing of an information processing device according to the present second embodiment;

FIG. 10 is a diagram (2) for describing the processing of the information processing device according to the present second embodiment;

FIG. 11 is a functional block diagram illustrating a configuration of the information processing device according to the present second embodiment;

FIG. 12 is a table illustrating an example of a data structure of a training data set according to the present second embodiment;

FIG. 13 is a table illustrating an example of a data structure of a treatment group table according to the present second embodiment;

FIG. 14 is a table illustrating an example of a data structure of an evaluation table according to the present second embodiment;

FIG. 15 is a flowchart illustrating a processing procedure of the information processing device according to the present second embodiment;

FIG. 16 is a graph illustrating a relationship between a stimulus and a response of a sensitivity function designed based on common sense;

FIG. 17 is a graph illustrating a relationship between a stimulus and a response of a sensitivity function designed based on experiment;

FIG. 18 is a graph illustrating a relationship between a stimulus and a response of a sensitivity function designed based on theory;

FIG. 19 is a diagram (1) for describing processing of generating a treatment group sample;

FIG. 20 is a graph (2) for describing the processing of generating a treatment group sample;

FIG. 21 is a diagram illustrating an example of a hardware configuration of a computer that implements functions similar to those of the information processing device according to the embodiment; and

FIG. 22 is a diagram for describing an agent model.

DESCRIPTION OF EMBODIMENTS

Hereinafter, embodiments of an agent model building program, an agent model building method, and an information processing device disclosed in the present application will be described in detail with reference to the drawings. Note that the embodiments do not limit the present disclosure.

[First Embodiment]

An information processing device according to the present first embodiment creates a model (agent model) that guarantees reproducibility of reactions under unknown circumstances and unknown measures by building an inductive model that is consistent with partial domain knowledge.

For example, even if an amount of domain knowledge is not large, partial domain knowledge may be obtained, and when the partial domain knowledge is obtained, a relationship between a specific stimulus and response may be able to be theoretically or empirically obtained. The information processing device of the present first embodiment calculates a penalty on the basis of the relationship between a stimulus and a response.

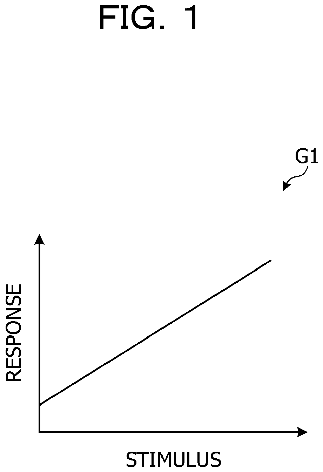

FIG. 1 is a graph illustrating a theoretically obtained relationship between a stimulus and a response. The horizontal axis of a graph G1 illustrated in FIG. 1 is an axis corresponding to the stimulus. A vertical axis of the graph G1 is an axis corresponding to the response. For example, in a case where a relationship between an incentive (for example, a discounted amount of a price for a product A) and a selected behavior (for example, a purchase probability of the product A) is known from the partial domain knowledge, the relationship between a stimulus and a response illustrated in the graph G1 is obtained. It is assumed that the stimulus corresponds to a discounted price of the product A, and the response corresponds to a probability that the product A is selected. The graph G1 illustrates monotonically increasing price elasticity.

In the present first embodiment, terms of stimulus variable (x), response variable (y), and sensitivity function (f) are defined. The stimulus variable (x) is a variable related to input to a human (agent) such as an incentive. The response variable (y) is a variable related to output from a human, such as a selected behavior. The sensitivity function (f) is a function that expresses a relationship between the stimulus variable and the response variable, such as the monotonically increasing price elasticity illustrated in the graph G1 in FIG. 1.

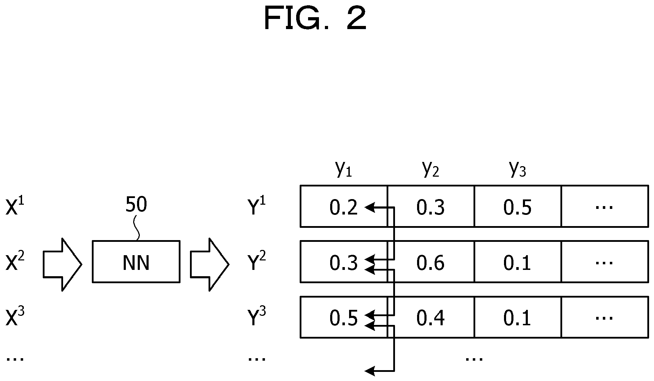

FIG. 2 is a diagram (1) for describing processing of the information processing device according to the present first embodiment. The information processing device evaluates output relationships among a plurality of conditions and calculates the penalty. The information processing device calculates an output $Y^1$ by inputting an input $X^1$ of a first condition to an NN 50. The information processing device calculates an output $Y^2$ by inputting an input $X^2$ of a second condition to the NN 50. The information processing device calculates an output $Y^3$ by inputting an input $X^3$ of a third condition to the NN 50. Each output contains a plurality of components ($y_1$, $y_2$, $y_3$, ...). For example, $y_1$ is the purchase probability of the product A.

For example, the information processing device evaluates the output relationships by comparing the component $y_1$ of the output $Y^1$ with the component $y_1$ of the output $Y^2$ and comparing the component $y_1$ of the output $Y^2$ with the component $y_1$ of the output $Y^3$. By performing such processing, it is possible to evaluate whether to match the human psychological law as illustrated in the graph G1 of FIG. 1. For example, in the graph G1, in a case where the response (output) when the stimulus (input) is small is smaller than the response (output) when the stimulus (input) is large, it can be said to match the human psychological law.

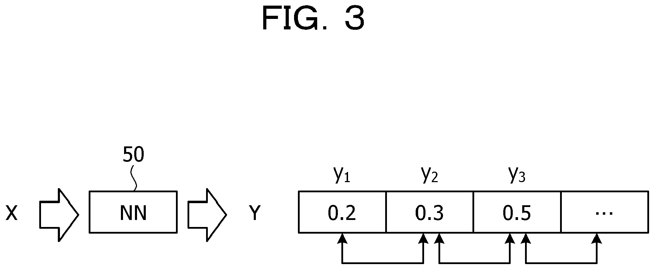

In contrast, in the existing technique, an output structure is analyzed under a certain condition and the penalty is calculated. FIG. 3 is a diagram for describing the existing technique. In the existing technique, an output Y is calculated by inputting an input X of a certain condition to the NN. The output Y contains a plurality of components ($y_1$, $y_2$, $y_3$, ...). For example, in the existing technique, the output structure is evaluated by comparing the component $y_1$ with the component $y_2$ of the output Y and comparing the component $y_2$ with the component $y_3$ of the output Y. By performing such processing, it is not possible to evaluate whether to match the human psychological law as illustrated in the graph G1 of FIG. 1.

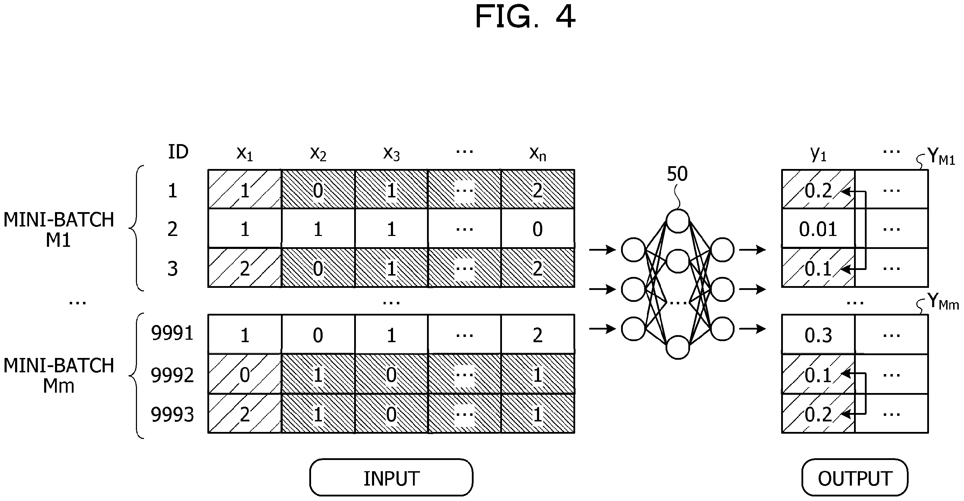

Next, the processing of the information processing device according to the present first embodiment will be more specifically described. FIG. 4 is a diagram (2) for describing the processing of the information processing device according to the present first embodiment. The information processing device makes a comparison between conditions based on an idea of control experiment. Here, the information processing device evaluates whether to satisfy the human psychological law on the basis of the sensitivity function illustrated in the graph G1 of FIG. 1. The graph G1 shows the law that the larger the stimulus variable, the larger the response variable.

The information processing device extracts m mini-batches M1 to Mm from a training data set, and selects samples having same component values other than the stimulus variable in each mini-batch. Here, a component corresponding to the stimulus variable (incentive) is defined as "$x_1$". The components other than the stimulus variable are defined as "$x_2$, $x_3$, ..., $x_n$".

In the mini-batch M1, the sample with Identifier (ID) "1" and the sample with ID "3" have the same component values other than the stimulus variable. Therefore, the information processing device selects the sample with ID "1" and the sample with ID "3". In the following description, the sample with ID "n" is referred to as "sample sn". The information processing device inputs the mini-batch M1 to the NN 50 and calculates an output $Y_{M1}$.

In the mini-batch Mm, a sample s9992 and a sample s9993 have the same component values other than the stimulus variable. Therefore, the information processing device selects the sample s9992 and the sample s9993. The information processing device inputs the mini-batch Mm to the NN 50 and calculates an output $Y_{Mm}$.

Next, the information processing device compares values of the response variables corresponding to a selected pair of the samples and evaluates whether to conform to the sensitivity function. For example, the information processing device evaluates a magnitude relationship of the response variables. Here, the component corresponding to the response variable is the output component "yi".

The information processing device compares the value "0.2" of $y_1$ corresponding to the sample s1 and the value "0.1" of $y_1$ corresponding to the sample s3 in the output $Y_{M1}$. A magnitude relationship of the stimulus variables is "the value of the stimulus variable ($x_1$) of the sample s1 < the value of the stimulus variable ($x_1$) of the sample s3", and thus in the case of conforming to the sensitivity function, "the value of the response variable ($y_1$) corresponding to the sample s1 < the value of the response variable ($y_1$) corresponding to the sample s3" should be satisfied. However, since $y_1$ corresponding to the sample s1 is "0.2" and $y_1$ corresponding to the sample s3 is "0.1", the information processing device evaluates that the pair of samples s1 and s3 does not conform to the sensitivity function.

The information processing device compares the value "0.1" of $y_1$ corresponding to the sample s9992 and the value "0.2" of $y_1$ corresponding to the sample s9993 in the output $Y_{Mm}$. A magnitude relationship of the stimulus variables is "the value of the stimulus variable ($x_1$) of the sample s9992 < the value of the stimulus variable ($x_1$) of the sample s9993", and thus in the case of conforming to the sensitivity function, "the value of the response variable ($y_1$) corresponding

to the sample s9992 < the value of the response variable ($y_1$) corresponding to the sample s9993" should be satisfied. Here, since $y_1$ corresponding to the sample s9992 is "0.1" and $y_1$ corresponding to the sample s9993 is "0.2", the information processing device evaluates that the pair of samples s9992 and s9993 conforms to the sensitivity function.

The information processing device executes the above-described processing for each mini-batch, and calculates a ratio of the samples having the values of the response variables not conforming to the sensitivity function as the penalty.

As described above, the information processing device according to the present first embodiment selects the samples having the same component values other than the stimulus variable for the mini-batches M1 to Mm, and compares the values of the response variables corresponding to the selected pair of samples. The information processing device calculates the ratio of the samples having the values of the response variables not conforming to the sensitivity function as the penalty. Thereby, the penalty related to the human psychological law can be calculated.

The information processing device sets a loss function on the basis of the penalty calculated by the above-described processing, and performs machine learning of NN 50, thereby creating a model (agent model) that guarantees reproducibility of reactions under unknown circumstances and unknown measures.

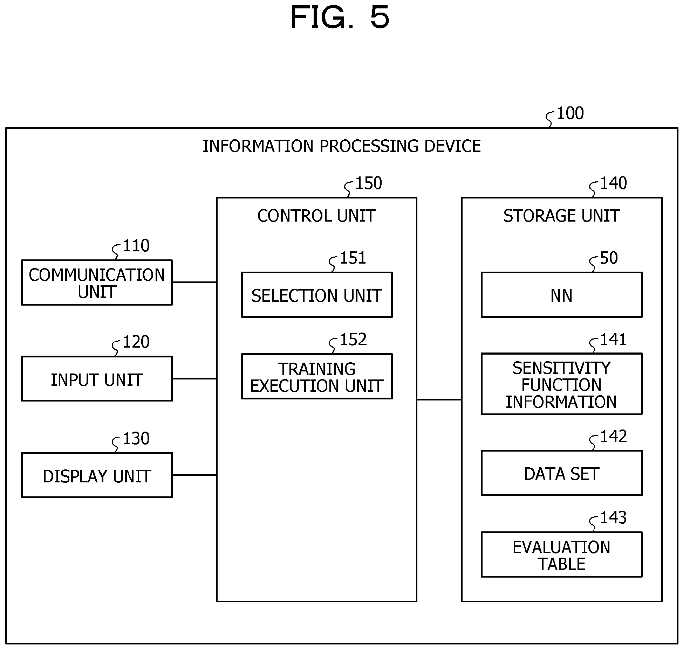

Next, a configuration example of the information processing device according to the present first embodiment will be described. FIG. 5 is a functional block diagram illustrating the configuration of the information processing device according to the present first embodiment. As illustrated in FIG. 5, an information processing device 100 includes a communication unit 110, an input unit 120, a display unit 130, a storage unit 140, and a control unit 150.

The communication unit 110 is connected to an external device or the like by wire or wirelessly, and exchanges information with the external device or the like. For example, the communication unit 110 is implemented by a network interface card (NIC) or the like. The information processing device 100 may acquire sensitivity function information 141, a training data set 142, and the like from the external device or the like via the communication unit 110.

The input unit 120 is an input device that inputs various types of information to the information processing device 100. The input unit 120 corresponds to a keyboard, a mouse, a touch panel, or the like.

The display unit 130 is a display device that displays information output from the control unit 150. The display unit 130 corresponds to a liquid crystal display, an organic electro luminescence (EL) display, a touch panel, or the like.

The storage unit 140 has an NN 50, a sensitivity function information 141, a training data set 142, and an evaluation table 143. The storage unit 140 is implemented by, for example, a semiconductor memory element such as a random access memory (RAM) or a flash memory, or a storage device such as a hard disk or an optical disk.

The NN 50 is data related to the neural network. For example, the NN 50 includes an input layer, a hidden layer, and an output layer. Parameters are set for the hidden layer and the like, and these parameters are adjusted by machine learning based on an error back propagation method or the like.

The sensitivity function information 141 is information indicating the relationship between the stimulus variable (x) and the response variable (y) obtained from partial domain knowledge, and is information corresponding to the sensitivity function (f). For example, the sensitivity function information 141 corresponds to the information of the graph G1 illustrated in FIG. 1.

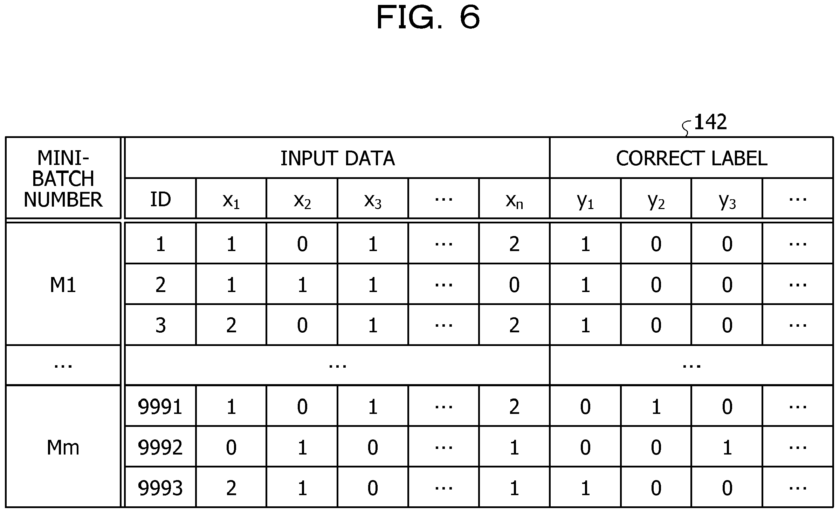

The training data set 142 is information used for machine learning of the NN 50. FIG. 6 is a table illustrating an example of a data structure of the training data set according to the present first embodiment. As illustrated in FIG. 6, the training data set 142 associates a mini-batch number, input data, and a correct label with one another. The mini-batch number is a number that identifies each mini-batch. For example, the samples of the input data corresponding to the mini-batch number "M1" are samples with IDs "1" to "3". The mini-batch with the mini-batch number Mn is referred to as "mini-batch Mn".

The input data includes IDs and the samples ($x_1$ to $x_n$). The ID is information that identifies the sample. The samples ($x_1$ to $x_n$) are the data input to the NN 50. In the present first embodiment, $x_1$ is defined as the component corresponding to the stimulus variable, of the plurality of components contained in the sample. The sample with ID "n" is referred to as a "sample sn".

The correct label contains the plurality of output values ($y_1$, $y_2$, $y_3$, ...). The training error is calculated by a difference between the output data when the input data is input to the NN 50 and the correct label.

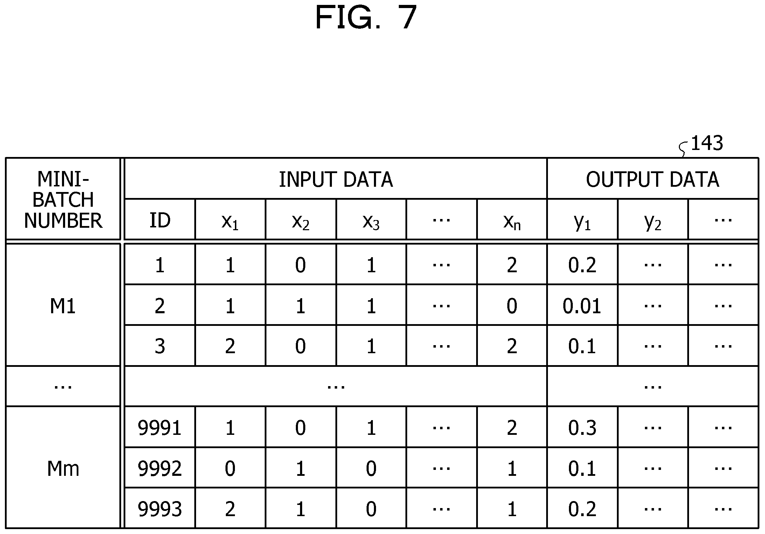

The description returns to FIG. 5. The evaluation table 143 is a table that retains the input data of the training data set 142 and data output from the NN 50 when the input data is input to the NN 50. FIG. 7 is a table illustrating an example of a data structure of the evaluation table according to the present first embodiment.

As illustrated in FIG. 7, the evaluation table 143 associates the mini-batch number, the input data, and the output data with one another. Descriptions of the mini-batch number and the input data are similar to the descriptions of the mini-batch number and the input data described with reference to FIG. 6.

The output data includes a plurality of output values ($y_1$, $y_2$, $y_3$, ...). In the present first embodiment, $y_1$ is a component corresponding to the response variable among the plurality of output values.

The description returns to FIG. 5. The control unit 150 includes a selection unit 151 and a training execution unit 152. The control unit 150 is implemented by, for example, a central processing unit (CPU) or a micro processing unit (MPU). Furthermore, the control unit 150 may be executed by, for example, an integrated circuit such as an application specific integrated circuit (ASIC) or a field programmable gate array (FPGA).

The selection unit 151 extracts m mini-batches M1 to Mm from the training data set 142, and selects samples having same values of components other than the stimulus variable ($x_1$) in each mini-batch. Description is given with reference to FIG. 6. The selection unit 151 selects the sample s1 and the sample s3 for the mini-batch number M1. The selection unit 151 selects the sample s1 and the sample s3 for the mini-batch number Mm.

The selection unit 151 repeatedly executes the above-described processing for the samples having other mini-batch numbers. The selection unit 151 outputs, for each mini-batch, "selection result information" in which a set of the IDs of the selected samples is set to the training execution unit 152.

The training execution unit 152 is a processing unit that adjusts parameters of the NN 50 by executing machine learning of the NN 50. For example, the training execution unit 152 repeatedly executes the processing of calculating the training error, the processing of calculating the penalty, and the processing of adjusting the parameters for each mini-batch as machine learning. Hereinafter, the processing of calculating the training error, the processing of calculating the penalty, and the processing of adjusting the parameters will be described.

The processing of calculating the training error will be described. The training execution unit 152 acquires the samples of the input data corresponding to one mini-batch of the training data set 142 and inputs the samples to the NN 50. The training execution unit 152 calculates the training error by calculating the error between the output data obtained by the NN 50 and the correct label corresponding to the selected mini-batch. For example, the training execution unit 152 calculates the training error by summing the error between the value of each piece of the output data and the value of each correct label. The training execution unit 152 repeatedly executes the above-described processing for each mini-batch.

The training execution unit 152 registers the relationship between the input data and the output data of each mini-batch in the evaluation table 143.

The processing of calculating the penalty will be described. The training execution unit 152 specifies the IDs of the pair of samples in the mini-batch on the basis of the selection result information, and compares the values of the response variables corresponding to the pair of samples on the basis of the evaluation table 143. The training execution unit 152 evaluates whether the values of the response variables conform to the sensitivity function defined in the sensitivity function information 141. The training execution unit 152 calculates the ratio of the set of samples that do not conform to the sensitivity function to the number of all the sets of samples of the selection result information as the penalty.

For example, the training execution unit 152 may calculate the penalty based on Equation (6). In Equation (6), Samples is aggregation of all the sets of samples of the selection result information. |Samples| is the number of elements in the aggregation. In Equation (6), $\Omega$ is defined by Equation (7). In Equation (7), f represents the sensitivity function, x represents the input of the NN, and y represents the output of the NN. $\Omega_{i,j}$ output "1" in the case where the output $y_i$ corresponding to the sample si and the output $y_j$ corresponding to the sample sj do not conform to the sensitivity function f in $x_i x_i$. Meanwhile, $\Omega_{i,j}$ output "0" in the case where the output $y_i$ corresponding to the sample si and the output $y_j$ corresponding to the sample sj conform to the sensitivity function f in $x_i x_i$.

[Math. 3]

$$W = \frac{\sum_{i,j \in Samples} \Omega_{i,j}}{|Samples|} \qquad \cdots (6)$$

[Math. 4]

$$\Omega_{i,j} = \begin{cases} 0, & \left(f(x_i) \le f(x_j)\right) \wedge \left(y_i \le y_j\right) \\ 0, & \left(f(x_i) > f(x_j)\right) \wedge \left(y_i > y_j\right) \\ 1, & otherwise \end{cases} \qquad \cdots (7)$$

Note that the processing in which the training execution unit 152 evaluates whether the values of the response variables of the pair of samples conform to the sensitivity function is similar to the processing described with reference to FIG. 4.

The processing of adjusting the parameters will be described. The training execution unit 152 adjusts the parameters of the NN 50 so that the value of the loss function, which is the sum of the training error calculated by the processing of calculating the training error and the penalty calculated by the processing of calculating the penalty, becomes small.

The training execution unit 152 trains the NN 50 by repeatedly executing the above-described processing until the value of the loss function becomes less than a predetermined value. The training execution unit 152 outputs the information of the NN 50 for which the machine learning has been completed. The training execution unit 152 may transmit the NN 50 to an external device via the communication unit 110.

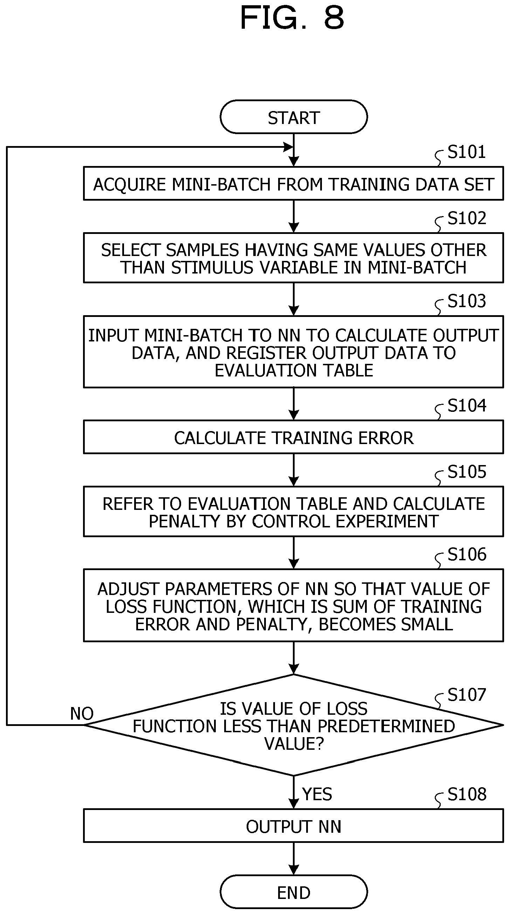

Next, an example of a processing procedure of the information processing device according to the present first embodiment will be described. FIG. 8 is a flowchart illustrating a processing procedure of the information processing device according to the present first embodiment. As illustrated in FIG. 8, the selection unit 151 of the information processing device 100 acquires the mini-batch from the training data set 142 (step S101). The selection unit 151 selects the samples having the same values other than the stimulus variable in the acquired mini-batch (step S102).

The training execution unit 152 of the information processing device 100 inputs the mini-batch to the NN 50 to calculate the output data, and registers the output data in the evaluation table 143 (step S103). The training execution unit 152 calculates the training error (step S104).

The training execution unit 152 refers to the evaluation table 143 and calculates the penalty by control experiment (step S105). The training execution unit 152 adjusts the parameters of the NN 50 so that the value of the loss function, which is the sum of the training error and the penalty, becomes small (step S106).

The training execution unit 152 determines whether the value of the loss function is less than a predetermined value (step S107). In the case where the value of the loss function is less than the predetermined value (step S107, No), the training execution unit 152 proceeds to step S101.

On the other hand, in the case where the value of the loss function is not less than the predetermined value (step S107, Yes), the training execution unit 152 outputs the NN 50 (step S108).

Next, effects of the information processing device 100 according to the present first embodiment will be described. The information processing device 100 selects the samples having the same component values other than the stimulus variable for each mini-batch, and compares the values of the response variables corresponding to the selected pair of samples. The information processing device 100 calculates the ratio of the samples having the values of the response variables not conforming to the sensitivity function as the penalty. Thereby, the penalty related to the human psychological law can be calculated.

The information processing device 100 sets the loss function on the basis of the penalty calculated by the above-described processing, and performs machine learning of the NN 50, thereby creating a model (agent model) that guarantees the reproducibility of reactions under unknown circumstances and unknown measures.

[Second Embodiment]

Before describing a second embodiment, improvement points of the information processing device 100 of the first embodiment will be described. The information processing device 100 has calculated the penalty by selecting the samples having the same component values other than the stimulus variable for each mini-batch, and comparing the values of the response variables corresponding to the selected pair of samples. However, if the number of components (items) of the input to the NN is large or the size of the training data set is small, the probability of finding the samples having the same inputs other than the stimulus variable decreases, and the penalty may not be able to be calculated.

In view of the above-described improvement points, an information processing device according to the present second embodiment artificially generates a sample that satisfies a comparable condition from a training data set and makes a comparison. In the following description, the artificially generated sample that satisfies the comparable condition is referred to as a "treatment group sample". Furthermore, in a case of particularly distinguishing an original sample used to generate the treatment group sample, the original sample is referred to as "control group sample".

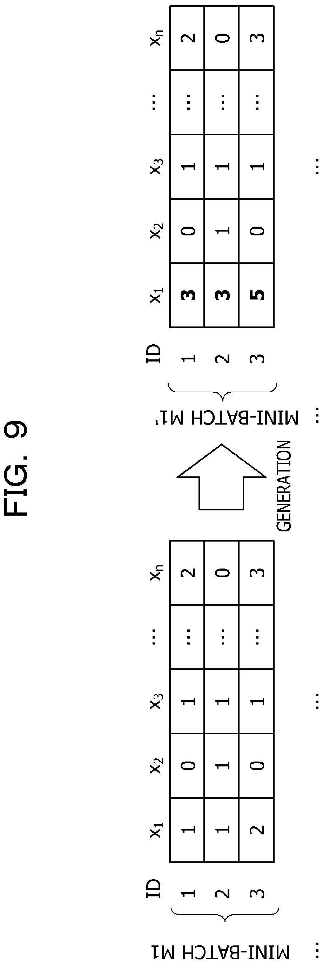

FIG. 9 is a diagram (1) for describing processing of the information processing device according to the present second embodiment. As illustrated in FIG. 9, the information processing device generates a mini-batch M1' on the basis of a mini-batch M1. The samples of the mini-batch M1' are the treatment group samples. A component corresponding to a stimulus variable (incentive) is defined as "$x_1$", similarly to the first embodiment. Components other than the stimulus variable are defined as "$x_2, x_3, ..., x_n$". The information processing device changes the stimulus variable of the mini-batch M1 and keeps values of the other components as they are to generate the mini-batch M1'. The changed value may be set by adding a predetermined value to the original value or may be randomly set.

The information processing device generates a sample with ID "1" of the mini-batch M1' by changing the value "1" of the stimulus variable $x_1$ of the sample s1 (the sample with the ID "1", the same similarly applies hereinafter) of the mini-batch M1 to "3". In the following description, a sample with ID "n" of the treatment group sample is generated as "sample s'n".

The information processing device generates a sample s'2 by changing the value "1" of the stimulus variable $x_1$ of sample s2 to "3". The information processing device generates a sample s'3 by changing the value "2" of the stimulus variable $x_1$ of sample s3 to "5".

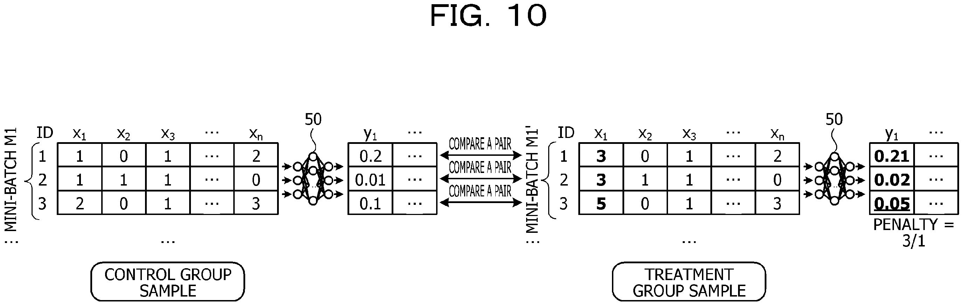

FIG. 10 is a diagram (2) for describing the processing of the information processing device according to the present second embodiment. The information processing device compares a value of a response variable in a case of inputting the control group sample to an NN 50 with a value of a response variable in a case of inputting the treatment group sample to the NN 50, evaluates whether to conform to a sensitivity function, and calculates a penalty. In FIG. 10, among the components of output data output from the NN 50, a component $y_1$ is set as the value of the response variable. The sensitivity function is the same as the sensitivity function described in the first embodiment. For example, the sensitivity function is a function in which the value of the response variable increases as the value of the stimulus variable increases.

The information processing device compares the response variable "0.2" in a case of inputting the sample s1 (stimulus variable "1") to the NN 50 with the response variable "0.21" in a case of inputting the sample s'1 (stimulus variable "3") to the NN 50. Then, the response variable with the larger stimulus variable is larger, and the information processing device evaluates it conforms to the sensitivity function.

The information processing device compares the response variable "0.01" in a case of inputting the sample s2 (stimulus variable "1") to the NN 50 with the response variable "0.02" in a case of inputting the sample s'2 (stimulus variable "3") to the NN 50. The response variable with the larger stimulus variable is larger, and the information processing device evaluates it conforms to the sensitivity function.

The information processing device compares the response variable "0.1" in a case of inputting the sample s3 (stimulus variable "2") to the NN 50 with the response variable "0.05" in a case of inputting the sample s'3 (stimulus variable "5") to the NN 50. The response variable with the larger stimulus variable is smaller, and the information processing device evaluates it does not conform to the sensitivity function.

The information processing device calculates the penalty as "1/3" because the response variables of a set of samples among the three sets of samples do not conform to the sensitivity function in the set of mini-batches M1 and M1' by the above-described processing. The information processing device executes the above-described processing for each mini-batch.

As described above, the information processing device according to the present second embodiment generates the treatment group sample by changing the value of the stimulus variable of the control group sample, and compares the response variable in the case of inputting the control group sample to the NN 50 with the response variable in the case of inputting the treatment group sample to the NN 50. The information processing device calculates a ratio of samples having values of the response variables not conforming to the sensitivity function as the penalty. Thereby, it is possible to calculate the penalty related to a human psychological law regardless of the size of the training data set or the number of input components.

The information processing device sets a loss function on the basis of the penalty calculated by the above-described processing, and performs machine learning of NN 50, thereby creating a model (agent model) that guarantees reproducibility of reactions under unknown circumstances and unknown measures.

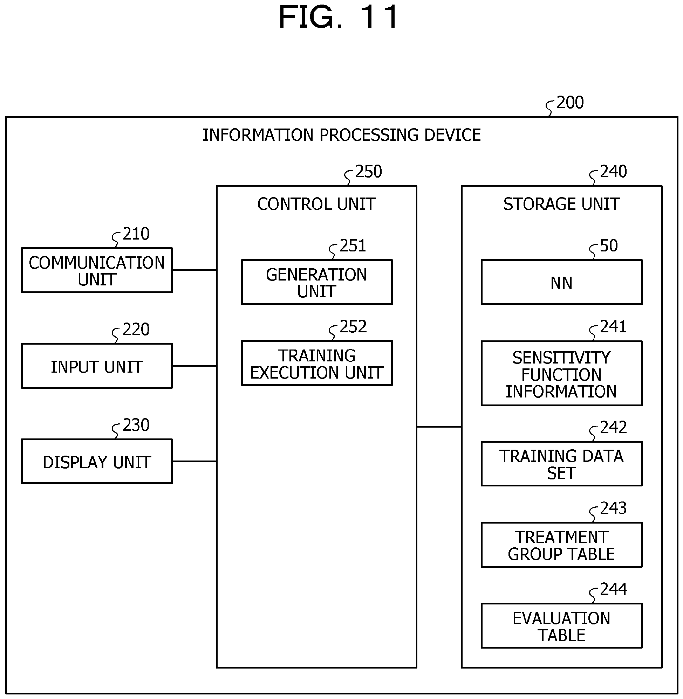

Next, a configuration example of the information processing device according to the present second embodiment will be described. FIG. 11 is a functional block diagram illustrating a configuration of the information processing device according to the present second embodiment. As illustrated in FIG. 11, an information processing device 200 includes a communication unit 210, an input unit 220, a display unit 230, a storage unit 240, and a control unit 250.

Descriptions of the communication unit 210, the input unit 220, and the display unit 230 are similar to the descriptions of the communication unit 210, the input unit 220, and the display unit 230 in the first embodiment.

The storage unit 240 has the NN 50, sensitivity function information 241, a training data set 242, a treatment group table 243, and an evaluation table 244. The storage unit 240 is implemented by, for example, a semiconductor memory element such as a RAM or a flash memory, or a storage device such as a hard disk or an optical disk.

Description of the NN 50 is similar to that of the NN 50 in the first embodiment.

Description of the sensitivity function information 241 is similar to that of the sensitivity function 141 in the first embodiment.

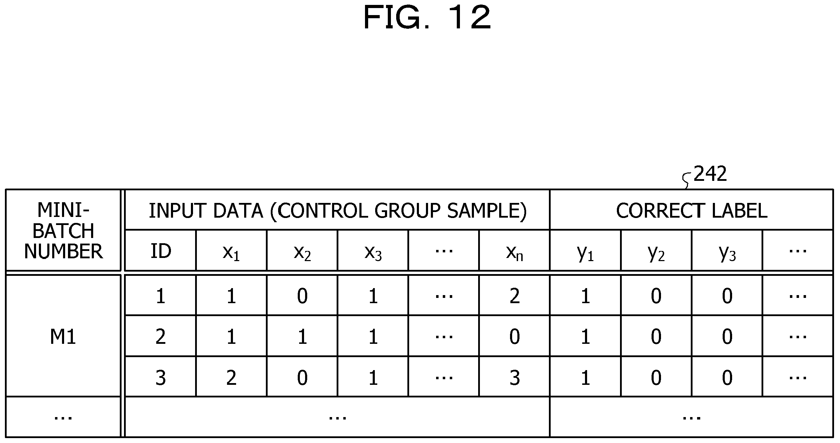

The training data set 242 is information used for machine learning of the NN 50. FIG. 12 is a table illustrating an example of a data structure of the training data set according to the present second embodiment. As illustrated in FIG. 12, the training data set 242 associates a mini-batch number, input data, and a correct label with one another. Descriptions of the mini-batch number, the input data, and the correct label are similar to the descriptions thereof in the first embodiment. The input data of the training data set 242 corresponds to the above-described control group sample.

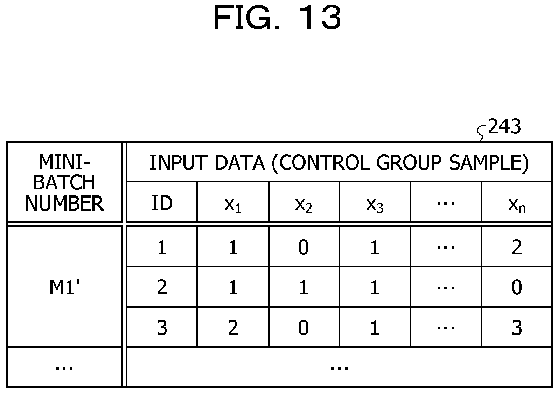

The treatment group table 243 is a table that retains the treatment group sample. FIG. 13 is a table illustrating an example of a data structure of the treatment group table according to the present second embodiment. As illustrated in FIG. 13, the treatment group table 243 associates the mini-batch number with the input data. The input data in the treatment group table 243 corresponds to the above-described treatment group sample.

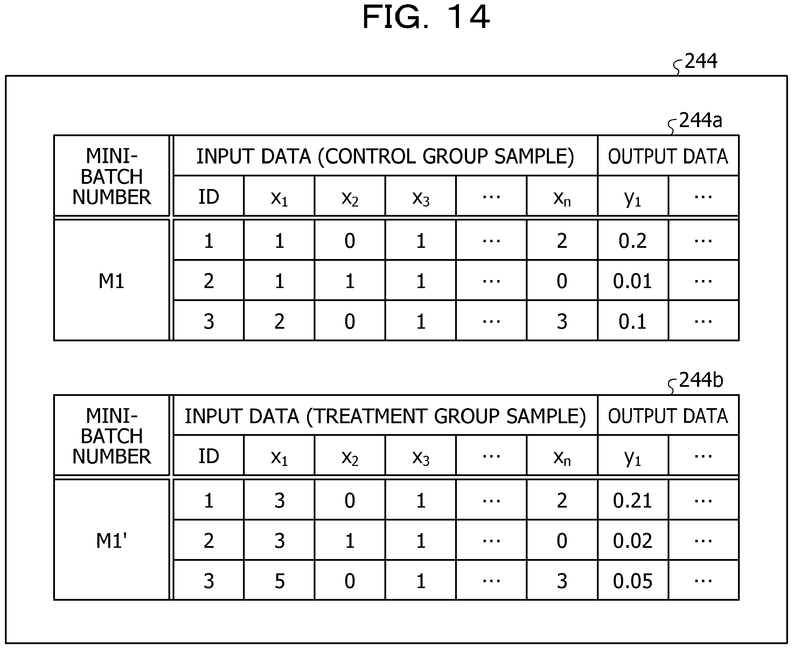

The evaluation table 244 retains the data (response variable) output from the NN 50 in the case of inputting the control group sample to the NN 50 and the data (response variable) output from the NN 50 in the case of inputting the treatment group sample to the NN 50 in association with each other. FIG. 14 is a table illustrating an example of a data structure of the evaluation table according to the present second embodiment. As illustrated in FIG. 14, the evaluation table 244 has a table 244a and a table 244b.

The table 244a associates the mini-batch number, the input data (control group sample), and the output data in association with one another. Descriptions of the mini-batch number and the control group sample are similar to the above descriptions of the mini-batch number and the control group sample. The output data is data output in the case where the control group sample is input to the NN 50. The output data includes a plurality of output values ($y_1$, $y_2$, $y_3$, ...). In the present second embodiment, $y_1$ is a component corresponding to the response variable among the plurality of output values.

The table 244b associates the mini-batch number, the input data (treatment group sample), and the output data with one another. Descriptions of the mini-batch number and the treatment group sample are similar to the above descriptions of the mini-batch number and the treatment group sample. The output data is data output in the case where the treatment group sample is input to the NN 50. The output data includes a plurality of output values ($y_1$, $y_2$, $y_3$, ...). In the present second embodiment, $y_1$ is a component corresponding to the response variable among the plurality of output values.

The description returns to FIG. 11. The control unit 250 has a generation unit 251 and a training execution unit 252. The control unit 250 is implemented by, for example, a CPU or an MPU. Furthermore, the control unit 250 may be implemented by, for example, an integrated circuit such as an ASIC or an FPGA.

The generation unit 251 acquires the control group sample from the training data set 242 in units of a mini-batch, and generates the treatment group sample by changing the value of the stimulus variable of the control group sample. The generation unit 251 registers the generated treatment group sample in the treatment group table 243. The processing in which the generation unit 251 generates the treatment group sample from the control group sample corresponds to the processing described with reference to FIG. 9.

The generation unit 251 repeatedly executes the above-described processing for each mini-batch stored in the training data set 242.

The training execution unit 252 is a processing unit that adjusts parameters of the NN 50 by executing machine learning of the NN 50. For example, the training execution unit 252 repeatedly executes processing of calculating a training error, processing of calculating a penalty, and processing of adjusting the parameters for each mini-batch as machine learning. Hereinafter, the processing of calculating the training error, the processing of calculating the penalty, and the processing of adjusting the parameters will be described.

The processing of calculating the training error will be described. The training execution unit 252 acquires the control group sample corresponding to one mini-batch of the training data set 242 and inputs the control group sample to the NN 50. The training execution unit 252 calculates the training error by calculating the error between the output data obtained by the NN 50 and the correct label corresponding to the selected mini-batch. For example, the training execution unit 252 calculates the training error by summing the error between the value of each piece of the output data and the value of each correct label. The training execution unit 152 repeatedly executes the above-described processing for each mini-batch.

The training execution unit 152 registers a relationship between the input data (control group sample) and the output data of each mini-batch in the evaluation table 244 (table 244a).

The processing of calculating the penalty will be described. The training execution unit 252 acquires the treatment group sample corresponding to one mini-batch in the treatment group table 243 and inputs the treatment group sample to the NN 50. The training execution unit 252 registers the relationship between the input data (treatment group sample) of each mini-batch and the output data obtained by the NN 50 in the evaluation table 244 (table 244b).

The training execution unit 252 compares a value of a response variable in a case of inputting the control group sample to an NN 50 with a value of a response variable in a case of inputting the treatment group sample to the NN 50 on the basis of the evaluation table 244, evaluates whether to conform to the sensitivity function, and calculates the penalty. The training execution unit 252 specifies a relationship between the stimulus variable and the response variable by the sensitivity function on the basis of the sensitivity function information 241. The processing in which the training execution unit 252 calculates the penalty corresponds to the processing described with reference to FIG. 10. The training execution unit 252 calculates the ratio of the samples not conforming to the sensitivity function among the samples of the mini-batch as the penalty.

The processing of adjusting the parameters will be described. The training execution unit 252 adjusts the parameters of the NN 50 so that a value of a loss function, which is the sum of the training error calculated by the processing of calculating the training error and the penalty calculated by the processing of calculating the penalty, becomes small.

The training execution unit 252 trains the NN 50 by repeatedly executing the above-described processing until the value of the loss function becomes less than a predetermined value. The training execution unit 252 outputs information of the NN 50 for which the machine learning has been completed. The training execution unit 252 may transmit the NN 50 to an external device via the communication unit 210.

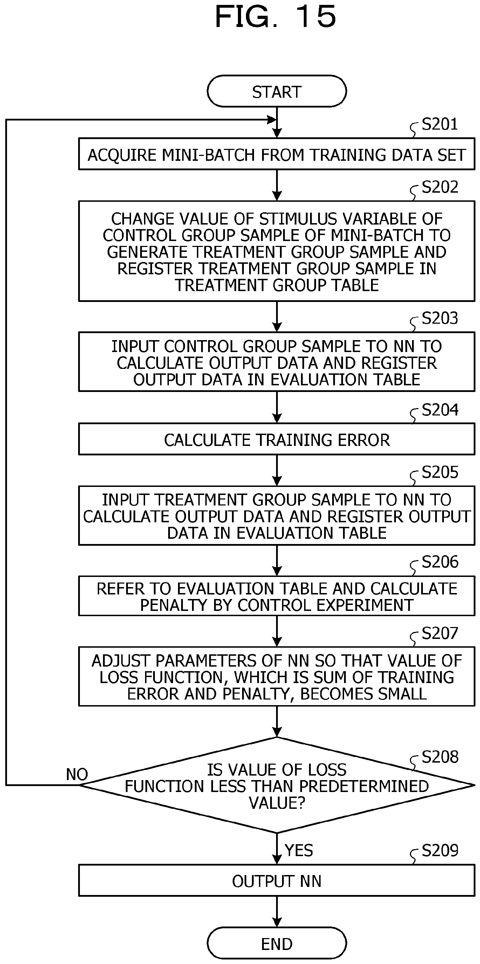

Next, an example of a processing procedure of the information processing device according to the present second embodiment will be described. FIG. 15 is a flowchart illustrating a processing procedure of the information processing device according to the present second embodiment. As illustrated in FIG. 15, the generation unit 251 of the information processing device 200 acquires a mini-batch from the training data set 242 (step S201). The generation unit 251 generates the treatment group sample by changing the stimulus variable of the control group sample of the acquired mini-batch, and registers the treatment group sample in the treatment group table 243 (step S202).

The training execution unit 252 of the information processing device 200 inputs the control group sample of the mini-batch to the NN 50 to calculate the output data, and registers the output data in the evaluation table 244 (step S203). The training execution unit 252 calculates the training error (step S204).

The training execution unit 252 inputs the treatment group sample to the NN 50 to calculate the output data, and registers the output data in the evaluation table 244 (step S205). The training execution unit 252 refers to the evaluation table 244 and calculates the penalty by control experiment (step S206). The training execution unit 252 adjusts the parameters of the NN 50 so that the value of the loss function, which is the sum of the training error and the penalty, becomes small (step S207).

The training execution unit 252 determines whether the value of the loss function is less than a predetermined value (step S208). In the case where the value of the loss function is less than the predetermined value (step S208, No), the training execution unit 152 proceeds to step S201.

On the other hand, in the case where the value of the loss function is not less than the predetermined value (step S208, Yes), the training execution unit 152 outputs the NN 50 (step S209).

Next, effects of the information processing device 200 according to the present second embodiment will be described. The information processing device 200 generates the treatment group sample by changing the value of the stimulus variable of the control group sample, and compares the response variable in the case of inputting the control group sample to the NN 50 with the response variable in the case of inputting the treatment group sample to the NN 50. The information processing device 200 calculates the ratio of the samples having the values of the response variables not conforming to the sensitivity function as the penalty. Thereby, it is possible to calculate the penalty related to a human psychological law regardless of the size of the training data set or the number of input components.

Note that the information processing device 200 may have the function of the selection unit 151 of the information processing device 100 described in the present first embodiment. For example, the information processing device 200 may cause the generation unit 251 to generate the treatment group sample in a case where the selection unit 151 is not able to find samples having the same input other than the stimulus variable in the control group sample.

[Third Embodiment]

In a third embodiment, a usage example of an information processing device (200) will be described. As a problem situation, there is a problem area of obtaining charge settings of public transportation to alleviate congestion by using a simulation. For example, in a case where a heavy congestion has occurred on an access route to a certain facility, the situation is that a city operator wants to obtain charge settings to disperse transportation devices and migration paths to be used (train/bus fare, expressway tolls, car parking space fees, and the like) by using a simulation.

There is research (existing technique) for building a simulation that reproduces urban dynamics using global positioning system (GPS) data, and utilizing the simulation in design of urban infrastructure. However, there is no data on how people behave when a transportation charge is different from reality. For this reason, the existing technique is incapable of reproduce the behavior of people when the charge is changed.

To apply the embodiments to the above-described problem, the following procedures (1) to (4) are required.

(1) Express domain knowledge about human psychological laws as a sensitivity function.
(2) Generate a treatment group sample based on a shape of the sensitivity function.
(3) Perform a virtual control experiment and calculate a penalty.
(4) Train an NN using a loss function with the penalty added.

Specific processing content of the procedures (1) to (4) will be described. In the present third embodiment, consider a case where there are two transportation modes: train and bus.

The procedure (1) will be described. As methods of designing the sensitivity function, A) design based on common sense, B) design based on experiment, and C) design based on theory are conceivable.

A) Design based on common sense will be described. A designer designs a change in a probability that the train will be selected (sensitivity function) based on common sense in a case where the bus fare is constant but the train fare is decreased. A probability that the train is selected will monotonically increase as the train fare is further reduced by measure of common sense. Therefore, the designer designs a monotonically increasing sensitivity function.

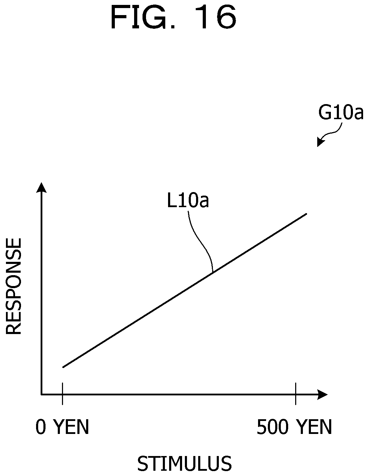

FIG. 16 is a graph illustrating a relationship between a stimulus and a response of the sensitivity function designed based on common sense. The horizontal axis of a graph GIOa in FIG. 16 corresponds to the stimulus (a discounted amount of the train fare), and the vertical axis corresponds to the response (the probability of selecting the train). Line L10a is a line illustrating the relationship between the stimulus and the response of the sensitivity function.

For the bus, the sensitivity function is designed in a similar method to that for the train.

B) Design based on experiment will be described. For the train and bus, the designer creates information such as travel times and the degrees of congestion that are respectively assumed in addition to the fares, and which transportation device you would choose in that situation is asked. By creating scenarios in which only the train fare is changed in various ways and asking a plurality of persons to make decisions under each scenario, the change in the selection probability (sensitivity function) for the discounted amount of the train fare is experimentally and statistically designed.

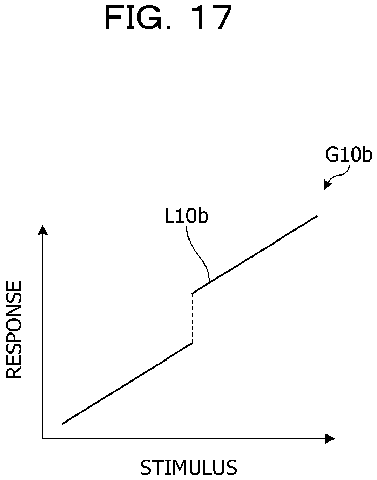

FIG. 17 is a graph illustrating a relationship between a stimulus and a response of the sensitivity function designed based on experiment. The horizontal axis of a graph GIOb in FIG. 17 corresponds to the stimulus (the discounted amount of the train fare), and the vertical axis corresponds to the response (the probability of selecting the train). Line LIOb is a line illustrating the relationship between the stimulus and the response of the sensitivity function.

For the bus, the sensitivity function is designed in a similar method to that for the train.

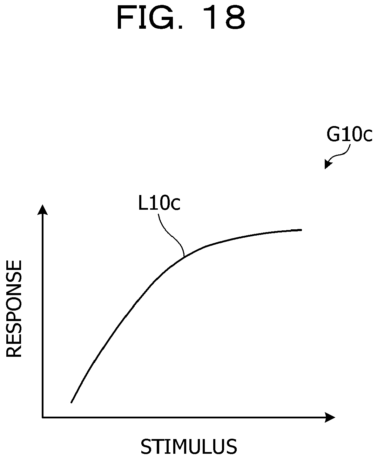

C) Design based on theory will be described. The designer designs the sensitivity function according to theory. FIG. 18 is a graph illustrating a relationship between a stimulus and a response of the sensitivity function designed based on a theory. The horizontal axis of a graph GIOc in FIG. 18 corresponds to the stimulus (the discounted amount of the train fare), and the vertical axis corresponds to the response (the probability of selecting the train). Line L10c is a line illustrating the relationship between the stimulus and the response of the sensitivity function.

The procedure (2) will be described. A generation unit 251 of the information processing device 200 selects one of the sensitivity functions designed in the procedure (1), and generates a treatment group sample based on the shape of the selected sensitivity function.

In a case where the selected sensitivity function is continuous, the information processing device 200 generates a treatment group sample by sampling both ends and some midpoints from an area (domain) taken by a stimulus variable $(x)$. The midpoint may be random.

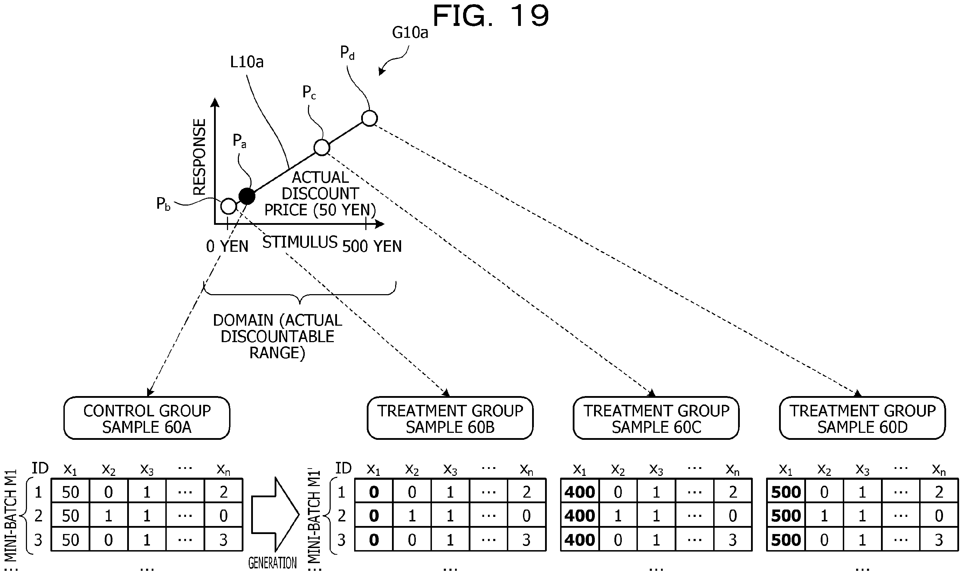

FIG. 19 is a diagram (1) for describing processing of generating the treatment group sample. In the example illustrated in FIG. 19, a case of generating the treatment group sample, using the sensitivity function illustrated in the graph GIOa of FIG. 16, will be described. For example, the generation unit 251 of the information processing device 200 generates treatment group samples 60B, 60C, and 60D on the basis of a control group sample 60A and the sensitivity function (graph G10a).

The control group sample 60A has a plurality of components "$x_1$, $x_2$, $x_3$, ... $x_n$", and the component corresponding to the stimulus variable (incentive) is "$x_1$". The component "$x_1$" of the control group sample 60A is a value corresponding to a point Pa on the line L10a. The stimulus variable corresponding to Pa corresponds to an actual discount area (50 yen).

The generation unit 251 generates the treatment group sample 60B by changing a value of the component "$x_1$" of the control group sample 60A to a value "0 yen" corresponding to the point Pb on the line L10a.

The generation unit 251 generates the treatment group sample 60C by changing the value of the component "$x_1$" of the control group sample 60A to a value "400 yen" corresponding to the point Pc on the line L10a.

The generation unit 251 generates the treatment group sample 60D by changing the value of the component "$x_1$" of the control group sample 60A to a value "500 yen" corresponding to the point Pd on the line L10a.

The information processing device 200 adds a periphery of discontinuity point to the sample in addition to the sample that is selected in a case where the selected sensitivity function is continuous, in a case where the sensitivity function is discontinuous.

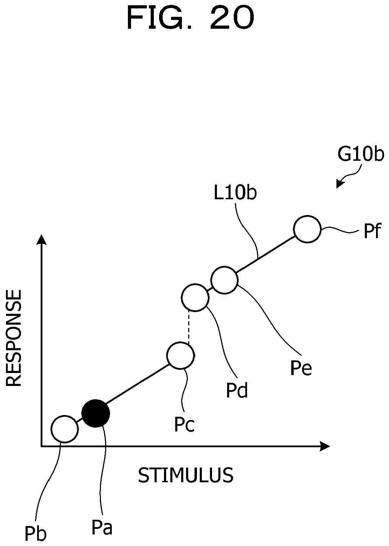

FIG. 20 is a graph (2) for describing the processing of generating the treatment group sample. In the example illustrated in FIG. 20, a case of generating the treatment group sample, using the sensitivity function illustrated in the graph GIOb of FIG. 17, will be described. In FIG. 20, the control group sample and each treatment group sample are not illustrated. The control group sample corresponds to the control group sample 60A illustrated in FIG. 20.

The generation unit 251 generates a treatment group sample by changing the value of the component "$x_1$" of the control group sample to the value corresponding to the point Pb on the line L10b. The generation unit 251 generates a treatment group sample by changing the value of the component "$x_1$" of the control group sample to the value corresponding to the point Pc on the line L10b.

The generation unit 251 generates a treatment group sample by changing the value of the component "$x_1$" of the control group sample to the value corresponding to the point Pd on the line L10b. The generation unit 251 generates a treatment group sample by changing the value of the component "$x_1$" of the control group sample to the value corresponding to the point Pe on the line L10b. The generation unit 251 generates a treatment group sample by changing the value of the component "$x_1$" of the control group sample to the value corresponding to the point Pf on the line L10b.

The procedure (3) will be described. The training execution unit 252 of the information processing device 200 performs a virtual control experiment on the basis of the control group sample and the plurality of treatment group samples described in the procedure (2), and calculates the penalty. For example, a case where the training execution unit 252 calculates the penalty, using the control group sample 60A and the treatment group samples 60B to 60D described in FIG. 19, will be described.

The training execution unit 252 calculates the penalty on the basis of the control group sample 60A and the treatment group sample 60B. Processing of calculating the penalty on the basis of the control group sample 60A and the treatment group sample 60B is similar to the processing described with reference to FIG. 10 of the second embodiment, and the like. The same applies to below.

The training execution unit 252 calculates the penalty on the basis of the control group sample 60A and the treatment group sample 60C. The training execution unit 252 calculates the penalty on the basis of the control group sample 60A and the treatment group sample 60D.

The procedure (4) will be described. The training execution unit 252 sets an average value of the penalties calculated in the respective sets in a penalty term of the loss function, trains an NN 50 so that the value of the loss function becomes small, and adjusts parameters. Here, the case of using the average value of the penalties has been described, but another basic statistic such as a median may also be used.

By executing procedures (1) to (4) as described above, it is possible to evaluate effects of unknown measures such as changing public transportation charges, which are not present in the data. Furthermore, the set charges for transportation to alleviate congestion can be obtained using simulation.

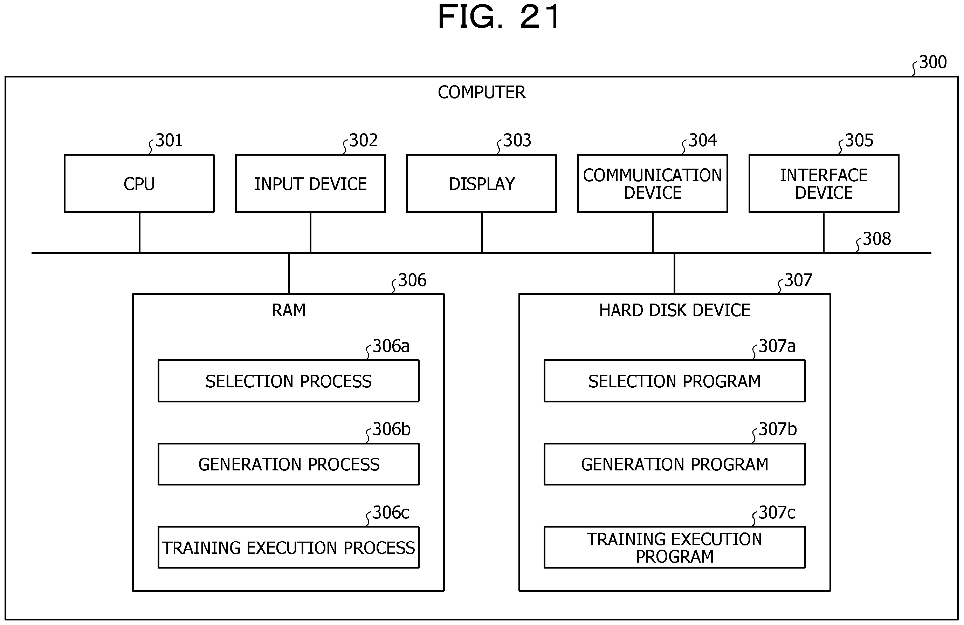

Next, an example of a hardware configuration of a computer that implements functions similar to those of the information processing device 100 or 200 in the above-described embodiment will be described. FIG. 21 is a diagram illustrating an example of a hardware configuration of a computer that implements functions similar to those of the information processing device according to the embodiment.

As illustrated in FIG. 21, a computer 300 includes a CPU 301 that executes various types of arithmetic processing, an input device 302 that receives data input from a user, and a display 303. Furthermore, the computer 300 includes a communication device 304 that exchanges data with an external device or the like via a wired or wireless network, and an interface device 305. Furthermore, the computer 300 includes a RAM 306 that temporarily stores various types of information, and a hard disk device 307. Then, each of the devices 301 to 307 is connected to a bus 308.

The hard disk device 307 includes a selection program 307a, a generation program 307b, and a training execution program 307c. Furthermore, the CPU 201 reads each of the programs 307a to 307c, and loads the programs to the RAM 306.

The selection program 307a functions as a selection process 306a. The generation program 307b functions as a generation process 306b. The training execution program 307c functions as a training execution process 306c.

Processing of the selection process 306a corresponds to the processing of the selection unit 151. Processing of the generation process 306b corresponds to the processing of the generation unit 251. Processing of the training execution process 306c corresponds to the processing of the training execution unit 152 or 252.

Note that each of the programs 307a to 307c may not always be stored in a hard disk device 207 from the beginning. For example, each of the programs is stored in a "portable physical medium" to be inserted in the computer 300, such as a flexible disk (FD), a compact disc read only memory (CD-ROM), a digital versatile disc (DVD), a magneto-optical disk, or an IC card. Then, the computer 300 may read each of the programs 307a to 307c and execute the read program.

## Claims

1. An agent model building program that causes at least one computer to execute a process, the process comprising:

   selecting a pair of samples among samples included in a data set, each of the pair of samples having a value other than stimulus variables related to an input to an agent;
   acquiring a first output result of the data set by inputting the data set to a neural network;
   acquiring a first penalty based on whether the value conform to a sensitivity function; and
   adjusting a parameter of the neural network until a training error based on the first output result and the first penalty satisfy a predetermined condition.

2. The agent model building program according to claim 1, wherein the process comprising:

   generating a treatment group data set obtained by adjusting the stimulus variables of the data set;
   acquiring a second output result of the treatment group data set by inputting the treatment group data set to the neural network;
   evaluating whether the second output result conform to the sensitivity function based on a difference between the first output result and the second output result for each of pairs of samples; and

acquiring a second penalty based on the evaluating.

3. The agent model building program according to claim 1 or 2, wherein
the adjusting includes decreasing a value of an objective function that is obtained by adding the training error and the first penalty.

4. The agent model building program according to claim 1, 2, or 3 wherein the acquiring the first penalty includes:

determining whether the value conform to the sensitivity function for each value of pairs of samples; and
acquiring a ratio of samples that do not conform to the sensitivity function to all the samples as the first penalty.

5. An agent model building method for a computer to execute a process comprising:

selecting a pair of samples among samples included in a data set, each of the pair of samples having a value other than stimulus variables related to an input to an agent;
acquiring a first output result of the data set by inputting the data set to a neural network;
acquiring a first penalty based on whether the value conform to a sensitivity function; and
adjusting a parameter of the neural network until a training error based on the first output result and the first penalty satisfy a predetermined condition.

6. The agent model building method according to claim 5, wherein the process comprising:

generating a treatment group data set obtained by adjusting the stimulus variables of the data set;
acquiring a second output result of the treatment group data set by inputting the treatment group data set to the neural network;
evaluating whether the second output result conform to the sensitivity function based on a difference between the first output result and the second output result for each of pairs of samples; and
acquiring a second penalty based on the evaluating.

7. The agent model building method according to claim 5 or 6, wherein
the adjusting includes decreasing a value of an objective function that is obtained by adding the training error and the first penalty.

8. The agent model building method according to claim 5, 6, or 7 wherein the acquiring the first penalty includes:

determining whether the value conform to the sensitivity function for each value of pairs of samples; and
acquiring a ratio of samples that do not conform to the sensitivity function to all the samples as the first penalty.

9. An information processing device comprising:

a selection unit that selects a pair of samples among samples included in a data set, each of the pair of samples having a value other than stimulus variables related to an input to an agent; and
a training execution unit that:

acquires a first output result of the data set by inputting the data set to a neural network,
acquires a first penalty based on whether the value conform to a sensitivity function, and
adjusting a parameter of the neural network until a training error based on the first output result and the first penalty satisfy a predetermined condition.

10. The information processing device according to claim 9, further comprising:

a generation unit that generates a treatment group data set obtained by adjusting the stimulus variables of the data set,
wherein the training execution unit further:

acquires a second output result of the treatment group data set by inputting the treatment group data set to the neural network,
evaluates whether the second output result conform to the sensitivity function based on a difference between the first output result and the second output result for each of pairs of samples, and
acquires a second penalty based on the evaluating.

11. The information processing device according to claim 9 or 10, wherein the training execution unit further decreases a value of an objective function that is obtained by adding the training error and the first penalty.

12. The information processing device according to claim 9, 10, or 11 wherein the training execution unit further:

    determines whether the value conform to the sensitivity function for each value of pairs of samples, and
    acquires a ratio of samples that do not conform to the sensitivity function to all the samples as the first penalty.

# FIG. 1

# FIG. 2

# FIG. 3

50

X ⇨ | NN | ⇨ Y

| $y_1$ | $y_2$ | $y_3$ | |
|-------|-------|-------|------|
| 0.2 | 0.3 | 0.5 | ... |

# FIG. 4

EP 4 191 472 A1

# FIG. 5

INFORMATION PROCESSING DEVICE 100

CONTROL UNIT 150
- SELECTION UNIT 151
- TRAINING EXECUTION UNIT 152

STORAGE UNIT 140
- NN 50
- SENSITIVITY FUNCTION INFORMATION 141
- DATA SET 142
- EVALUATION TABLE 143

COMMUNICATION UNIT 110

INPUT UNIT 120

DISPLAY UNIT 130

# FIG. 6

| MINI-BATCH NUMBER | INPUT DATA | | | | | | CORRECT LABEL | | | |
|---|---|---|---|---|---|---|---|---|---|---|
| | ID | $x_1$ | $x_2$ | $x_3$ | $\cdots$ | $x_n$ | $y_1$ | $y_2$ | $y_3$ | $\cdots$ |
| M1 | 1 | 1 | 0 | 1 | $\cdots$ | 2 | 1 | 0 | 0 | $\cdots$ |
| | 2 | 1 | 1 | 1 | $\cdots$ | 0 | 1 | 0 | 0 | $\cdots$ |
| | 3 | 2 | 0 | 1 | $\cdots$ | 2 | 1 | 0 | 0 | $\cdots$ |
| $\cdots$ | $\cdots$ | | | | | | $\cdots$ | | | |
| Mm | 9991 | 1 | 0 | 1 | $\cdots$ | 2 | 0 | 1 | 0 | $\cdots$ |
| | 9992 | 0 | 1 | 0 | $\cdots$ | 1 | 0 | 0 | 1 | $\cdots$ |
| | 9993 | 2 | 1 | 0 | $\cdots$ | 1 | 1 | 0 | 0 | $\cdots$ |

142

EP 4 191 472 A1

# FIG. 7

143

| MINI-BATCH NUMBER | INPUT DATA | | | | | | OUTPUT DATA | | |
|---|---|---|---|---|---|---|---|---|---|
| | ID | $x_1$ | $x_2$ | $x_3$ | ⋯ | $x_n$ | $y_1$ | $y_2$ | ⋯ |
| M1 | 1 | 1 | 0 | 1 | ⋯ | 2 | 0.2 | ⋯ | ⋯ |
| | 2 | 1 | 1 | 1 | ⋯ | 0 | 0.01 | ⋯ | ⋯ |
| | 3 | 2 | 0 | 1 | ⋯ | 2 | 0.1 | ⋯ | ⋯ |
| ⋯ | ⋯ | | | | | | ⋯ | | |
| Mm | 9991 | 1 | 0 | 1 | ⋯ | 2 | 0.3 | ⋯ | ⋯ |
| | 9992 | 0 | 1 | 0 | ⋯ | 1 | 0.1 | ⋯ | ⋯ |
| | 9993 | 2 | 1 | 0 | ⋯ | 1 | 0.2 | ⋯ | ⋯ |

# FIG. 8

```
                    ┌─────────────┐
                    │    START    │
                    └──────┬──────┘
                           │                        ⌐S101
          ┌────────────────▼─────────────────────┐
          │ ACQUIRE MINI-BATCH FROM TRAINING DATA SET │
          └────────────────┬─────────────────────┘
                           │                        ⌐S102
          ┌────────────────▼─────────────────────┐
          │ SELECT SAMPLES HAVING SAME VALUES OTHER │
          │ THAN STIMULUS VARIABLE IN MINI-BATCH    │
          └────────────────┬─────────────────────┘
                           │                        ⌐S103
          ┌────────────────▼─────────────────────┐
          │ INPUT MINI-BATCH TO NN TO CALCULATE OUTPUT │
          │ DATA, AND REGISTER OUTPUT DATA TO        │
          │ EVALUATION TABLE                        │
          └────────────────┬─────────────────────┘
                           │                        ⌐S104
          ┌────────────────▼─────────────────────┐
          │      CALCULATE TRAINING ERROR         │
          └────────────────┬─────────────────────┘
                           │                        ⌐S105
          ┌────────────────▼─────────────────────┐
          │ REFER TO EVALUATION TABLE AND CALCULATE │
          │ PENALTY BY CONTROL EXPERIMENT           │
          └────────────────┬─────────────────────┘
                           │                        ⌐S106
          ┌────────────────▼─────────────────────┐
          │ ADJUST PARAMETERS OF NN SO THAT VALUE OF │
          │ LOSS FUNCTION, WHICH IS SUM OF TRAINING  │
          │ ERROR AND PENALTY, BECOMES SMALL         │
          └────────────────┬─────────────────────┘
                           │                        ⌐S107
              NO      ◇────▼─────────────────────◇
          ┌───────────┤ IS VALUE OF LOSS          │
          │           │ FUNCTION LESS THAN PREDETERMINED │
          │           │ VALUE?                     │
          │           ◇────┬─────────────────────◇
          │                │ YES                    ⌐S108
          │           ┌────▼─────────────────────┐
          │           │        OUTPUT NN          │
          │           └────┬─────────────────────┘
          │                │
          │           ┌────▼──────┐
          │           │    END    │
          │           └───────────┘
```

FIG. 9

EP 4 191 472 A1

# FIG. 10

# FIG. 11

# FIG. 12

242

| MINI-BATCH NUMBER | INPUT DATA (CONTROL GROUP SAMPLE) | | | | | | CORRECT LABEL | | | |
|---|---|---|---|---|---|---|---|---|---|---|
| | ID | $x_1$ | $x_2$ | $x_3$ | $\cdots$ | $x_n$ | $y_1$ | $y_2$ | $y_3$ | $\cdots$ |
| M1 | 1 | 1 | 0 | 1 | $\cdots$ | 2 | 1 | 0 | 0 | $\cdots$ |
| | 2 | 1 | 1 | 1 | $\cdots$ | 0 | 1 | 0 | 0 | $\cdots$ |
| | 3 | 2 | 0 | 1 | $\cdots$ | 3 | 1 | 0 | 0 | $\cdots$ |
| $\cdots$ | $\cdots$ | | | | | | $\cdots$ | | | |

# FIG. 13

243

| MINI-BATCH NUMBER | INPUT DATA (CONTROL GROUP SAMPLE) | | | | | |
|---|---|---|---|---|---|---|
| | ID | $x_1$ | $x_2$ | $x_3$ | $\cdots$ | $x_n$ |
| M1' | 1 | 1 | 0 | 1 | $\cdots$ | 2 |
| | 2 | 1 | 1 | 1 | $\cdots$ | 0 |
| | 3 | 2 | 0 | 1 | $\cdots$ | 3 |
| $\cdots$ | $\cdots$ | | | | | |

# FIG. 14

**244**

**244a**

| MINI-BATCH NUMBER | INPUT DATA (CONTROL GROUP SAMPLE) | | | | | OUTPUT DATA | |
|---|---|---|---|---|---|---|---|
| | ID | $x_1$ | $x_2$ | $x_3$ | $\cdots$ | $x_n$ | $y_1$ | $\cdots$ |
| M1 | 1 | 1 | 0 | 1 | $\cdots$ | 2 | 0.2 | $\cdots$ |
| | 2 | 1 | 1 | 1 | $\cdots$ | 0 | 0.01 | $\cdots$ |
| | 3 | 2 | 0 | 1 | $\cdots$ | 3 | 0.1 | $\cdots$ |

**244b**

| MINI-BATCH NUMBER | INPUT DATA (TREATMENT GROUP SAMPLE) | | | | | OUTPUT DATA | |
|---|---|---|---|---|---|---|---|
| | ID | $x_1$ | $x_2$ | $x_3$ | $\cdots$ | $x_n$ | $y_1$ | $\cdots$ |
| M1' | 1 | 3 | 0 | 1 | $\cdots$ | 2 | 0.21 | $\cdots$ |
| | 2 | 3 | 1 | 1 | $\cdots$ | 0 | 0.02 | $\cdots$ |
| | 3 | 5 | 0 | 1 | $\cdots$ | 3 | 0.05 | $\cdots$ |

# FIG. 15

START

S201
ACQUIRE MINI-BATCH FROM TRAINING DATA SET

S202
CHANGE VALUE OF STIMULUS VARIABLE OF CONTROL GROUP SAMPLE OF MINI-BATCH TO GENERATE TREATMENT GROUP SAMPLE AND REGISTER TREATMENT GROUP SAMPLE IN TREATMENT GROUP TABLE

S203
INPUT CONTROL GROUP SAMPLE TO NN TO CALCULATE OUTPUT DATA AND REGISTER OUTPUT DATA IN EVALUATION TABLE

S204
CALCULATE TRAINING ERROR

S205
INPUT TREATMENT GROUP SAMPLE TO NN TO CALCULATE OUTPUT DATA AND REGISTER OUTPUT DATA IN EVALUATION TABLE

S206
REFER TO EVALUATION TABLE AND CALCULATE PENALTY BY CONTROL EXPERIMENT

S207
ADJUST PARAMETERS OF NN SO THAT VALUE OF LOSS FUNCTION, WHICH IS SUM OF TRAINING ERROR AND PENALTY, BECOMES SMALL

S208
IS VALUE OF LOSS FUNCTION LESS THAN PREDETERMINED VALUE?

NO

YES
S209
OUTPUT NN

END

# FIG. 16

G10a

L10a

RESPONSE

0 YEN                    500 YEN

STIMULUS

# FIG. 17

# FIG. 18

# FIG. 19

# FIG. 20

# FIG. 21

COMPUTER ⌇300

| ⌇301 | ⌇302 | ⌇303 | ⌇304 | ⌇305 |
|---|---|---|---|---|
| CPU | INPUT DEVICE | DISPLAY | COMMUNICATION DEVICE | INTERFACE DEVICE |

⌇308

RAM ⌇306

SELECTION PROCESS ⌇306a

GENERATION PROCESS ⌇306b

TRAINING EXECUTION PROCESS ⌇306c

HARD DISK DEVICE ⌇307

SELECTION PROGRAM ⌇307a

GENERATION PROGRAM ⌇307b

TRAINING EXECUTION PROGRAM ⌇307c

EP 4 191 472 A1

# FIG. 22

STIMULUS

COGNITION

BEHAVIOR

DECISION-MAKING

1a

1b

Europäisches
Patentamt

European
Patent Office

Office européen
des brevets

# EUROPEAN SEARCH REPORT

**Application Number**

EP 22 19 6068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JÄGER GEORG: "Using Neural Networks for a Universal Framework for Agent-based Models", MATHEMATICAL AND COMPUTER MODELLING OF DYNAMICAL SYSTEMS, vol. 27, no. 1, 2 March 2021 (2021-03-02), pages 162-178, XP093039902, NL ISSN: 1387-3954, DOI: 10.1080/13873954.2021.1889609 * page 162, paragraph 1 - page 163, paragraph 1 * * page 164, last paragraph - page 165, paragraph 3 * * page 175, paragraph 2 - paragraph 3 * * page 164, paragraph 3 - paragraph 5 * * page 165, last paragraph - page 166, paragraph 3; figure 1 * ----- | 1-12 | INV. G06N3/006 G06N3/09 ADD. G06N3/04 G06N3/084 |
| A | WEI JI MA ET AL: "A neural network walks into a lab: towards using deep nets as models for human behavior", ARXIV.ORG, CORNELL UNIVERSITY LIBRARY, 201 OLIN LIBRARY CORNELL UNIVERSITY ITHACA, NY 14853, 2 May 2020 (2020-05-02), XP081659725, * page 8 - page 10 * * page 11, paragraph 3 - page 13, paragraph 2 * * page 23, paragraph 4 - page 24 * ----- | 1-12 | **TECHNICAL FIELDS SEARCHED (IPC)** G06N |
| A | WO 2021/066796 A1 (SIEMENS AG [DE]; SIEMENS CORP [US]) 8 April 2021 (2021-04-08) * paragraph [0013] - paragraph [0024] * ----- -/-- | 1-12 | |

The present search report has been drawn up for all claims

| Place of search | Date of completion of the search | Examiner |
|---|---|---|
| Munich | 18 April 2023 | Herri, Edmond |

EPO FORM 1503 03.82 (P04C01)

Europäisches
Patentamt

European
Patent Office

Office européen
des brevets

## EUROPEAN SEARCH REPORT

Application Number

EP 22 19 6068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FAKHRADIN GHASEMI FAKHRADIN GHASEMI ET AL: "A Neural Network Classifier Model for Forecasting Safety Behavior at Workplaces", IRANIAN JOURNAL OF HEALTH, SAFETY AND ENVIRONMENT, vol. 4, no. 4, 31 July 2017 (2017-07-31), pages 835-843, XP093039798, ISSN: 2345-3206 * page 836 – page 837 * ----- | 1-12 | |
| | | | **TECHNICAL FIELDS SEARCHED (IPC)** |

The present search report has been drawn up for all claims

| Place of search | Date of completion of the search | Examiner |
|---|---|---|
| Munich | 18 April 2023 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 6068

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2023

| Patent document cited in search report | | Publication date | Patent family member(s) | | Publication date |
|---|---|---|---|---|---|
| WO 2021066796 | A1 | 08-04-2021 | CN 114730407 | A | 08-07-2022 |
| | | | EP 4018399 | A1 | 29-06-2022 |
| | | | US 2022366244 | A1 | 17-11-2022 |
| | | | WO 2021066796 | A1 | 08-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180157977
- WO 2021005739 A
- JP 2001134706 A